# EUROPEAN PATENT APPLICATION

(11) **EP 1 787 600 A1**
(43) Date of publication of application: **23.05.2007**
(21) Application number: 06023302.0
(22) Date of filing: 09.11.2006
(51) Int. Cl.: A61C 7/10

(54) **Construction for quickly expanding a patient palate**

(30) Priority: 22.11.2005 IT MI20052231
(71) Applicant: Veltri, Nicola, 20122 Milano (IT); Veltri, Alessandro, 20122 Milano (IT)
(72) Inventor: Veltri, Nicola, 20122 Milano (IT); Veltri, Alessandro, 20122 Milano (IT)
(74) Representative: Cicogna, Franco

(57) **Abstract**

An improved construction (1) for quickly expanding a patient palate comprises a central body (2) therefrom a single right palate half-bar (3) and a single left palate half-bar (4) extend which, in turn, are housed through orthodontic bands (5), or are directly glued, in/to a single right dental element (6) and a single left dental element (7) of a permanent or deciduous type.

## Description

### BACKGROUND OF THE INVENTION

The present invention relates to an improved construction for quickly expanding a patient palate.

Among available prior orthodontic tools for correcting defects caused by a reduction of the cross diameter of the top jawbone, the disjunction of the middle palatine suture, provided by an orthopedic article of manufacture called "palate quick expander", has been found very efficient, since it has a very simple and operatively flexible construction, which can be easily fitted to several clinical applications.

Clinical operators have also found that, in this connection, it would be very important to provide this surgical tool with a maximum aeration to prevent the palatine mucosa from being compressed.

A prior apparatus of the above type conventionally comprises four joined bands, which are coupled by coupling bars to the palatine jack, which latter must be designed to provide an expansion of 0.80 mm or 1 mm, obtained by a full revolution of the jack screw.

Said bands are affixed on the first permanent molar teeth or on the first or second deciduous molar teeth (that is the permanent or non permanent molar teeth) and the apparatus is affixed for the overall duration of the expanding operation.

### SUMMARY OF THE INVENTION

Accordingly, the aim of the present invention is to provide a quick palate expander which is improved with respect to prior palate expanders.

Within the scope of the above mentioned aim, a main object of the invention is to provide such an expander which has a small size, provides an improved oral hygiene hand has a small cost and an improved operation.

Yet another object of the invention is to provide a palate expander which does not hinder a free wedge-opening of the inter-maxillary suture.

According to one aspect of the present invention, the above mentioned aim and objects, as well as yet other objects, which will become more apparent hereinafter, are achieved by an improved construction for quickly expanding a patient palate, characterized in that said construction comprises a central body therefrom a single right palate half-bar and a single left palate half-bar extend.

Said half-bars, in turn, are housed, through orthodontic bands, or are directly glued, into, a single right dental element and a single left dental element.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative but not limitative example, in the accompanying drawings, where:

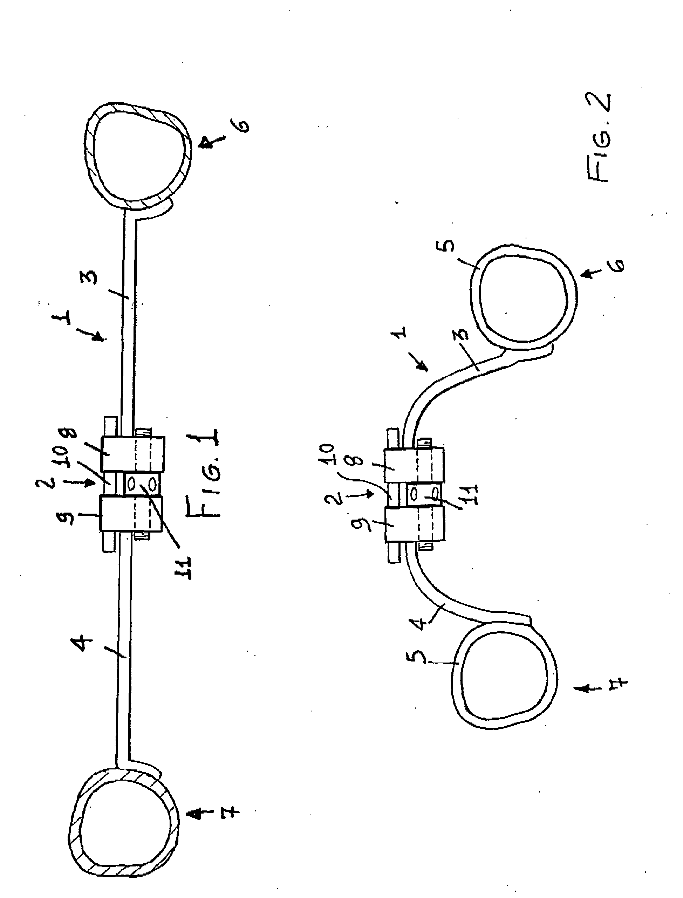

Figure 1 is a schematic view of the improved quick expander according to the present invention;
Figure 2 is a top plan view, schematically showing the quick expander according to the present invention, arranged for an application thereof;

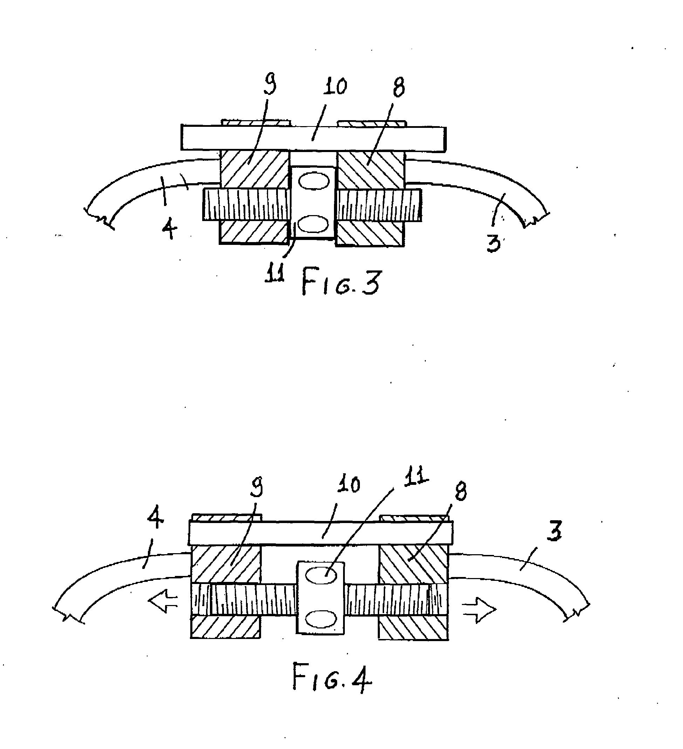

Figures 3 and 4 show two enlarged views of a detail allowing the palate expander to be adjusted;

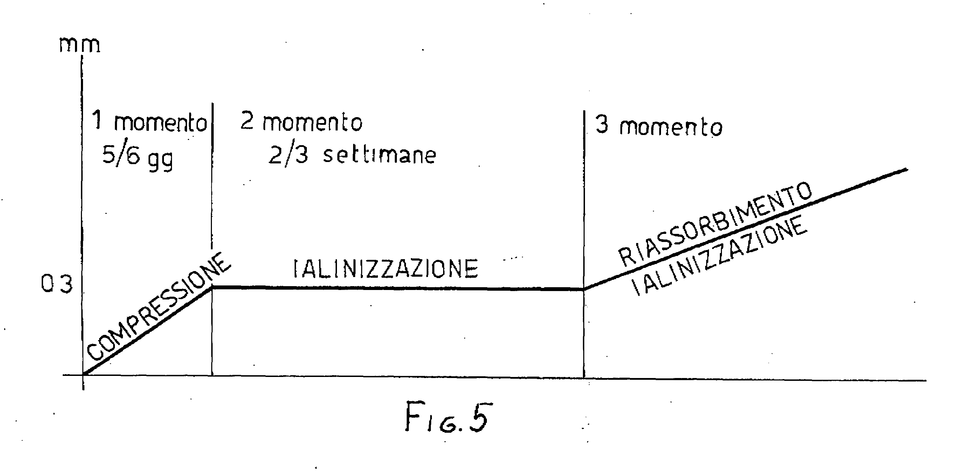

Figure 5 shows a table representing the hyalinization curve; and

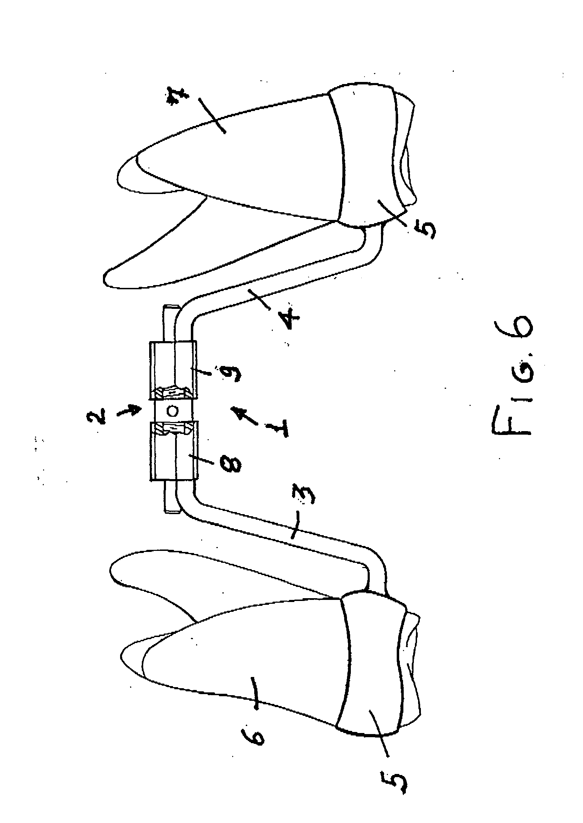

Figure 6 shows a further schematic view of the quick expander according to the present invention, applied to a pair of teeth.

### DESCRIPTION OF THE PREFERRED EMBODIMENT

With reference to the number references of the above mentioned figures, the expander construction according to the present invention, which has been generally indicated by the reference number 1, comprises a central body 2, therefrom a single right palate half-bar 3 and a single left palate half-bar 4 extend.

Said right and left palate half-bars, in particular, are either housed, through orthodontic bands 5 in, or directly glued to, a single right dental element 6 and a single left dental element 7.

The expander construction according to the invention differs from all prior like expanders, by the fact that the latter comprise four half-bars (two right half-bars and two left half-bars) which, in turn, are housed in four dental elements (two right and two left dental elements).

The central body 2 comprises a pair of blocks 8 and 9 respectively designed for supporting the right half-bar 3 and left half-bar 4, and being coupled by a guide bar 10 rigid with one of the blocks and slidable in a suitable sliding seat or recess in the other block.

The two blocks 8 and 9 are moreover coupled to one another by a coupling screw 11 having opposite screw threads, thereby, for each rotation of the screw 11, the blocks will be either moved to one another or away from one another.

The expander construction according to the present invention, with respect to prior expanders, has .the important feature that it can be anchored, through orthodontic anchoring bands, or directly "glued", to the teeth, that is only to two dental elements (first permanent molar teeth 6+6 of permanent dentition or second deciduous molar teeth V+V of mixed dentition, or first deciduous molar teeth IV+IV of deciduous dentition).

Said orthodontic bands or facets are welded to a single bar joining elements.

The central screw 11 is designed with a variable length (8, 11 or 13 mm) depending on the expansion to be achieved.

With respect to prior expanders, the expander according to the present invention, being anchored on two teeth only by a single anchoring half-bar, provides the advantages of a less size, an improved oral hygiene, a less cost and an improved operating stability.

Another advantage is that the subject expander does not hinder a free wedge opening of the inter-maxillary suture, whereas, by using the four-band expander, the orthodontic bands arranged on four dental elements 6 4 + 4 6, joined by four palate half-bars, will hinder a maximum opening of the palatine middle suture.

In the subject expander, the above mentioned opening will exclusively and only depend on the mechanical actuation of the central expander screw.

In prior expanders, that same opening would be less than that which can be obtained, in a natural manner, without any constrictions at a premolar level, by the expander according to the present invention.

Thus, it is possible to operatively increase the inter-canine diameter, while providing an efficient transforming from a high and ogival palate to a structurally physiologic palate.

Yet an important feature of the expander according to the present invention is that, for each operation of the expander central screw, which will provide on the affected dental tooth element a pressure corresponding to about 8/9 Kg, all the generated force is transmitted only to two dental elements and not to four dental elements.

This is achieved since only two palate half-bars, instead of four, are herein used.

The force of about 8 Kg, provided as the screw is operated, is directly applied on two dental elements, thereby applying to each of them a force-pressure of about 4 Kg.

In a prior expander including four dental elements, on the contrary, that same force of about 8 Kg, is applied on four dental elements, thereby to each said dental element a force-pressure of about 2 Kg will be applied.

The above feature is a very important, since it allows to provide a safe and repeatable opening of the palate middle suture.

In fact, to form the so-called hyalinization zone, which is that part of the hyalinizated bone (of a hard and strength nature) preventing the tooth from being ejected from its socket because of the force-pressure applied thereto, it is necessary that the mentioned force-pressure be actually a heavy orthopedic force (8/9 Kg), as is shown in the enclosed Table.

In particular said hyalinization zone will be directly proportional to the force strength, duration and application point, but, most importantly, it will also depend on the root surface of the dental element subjected to the heavy force.

In fact, as the tooth root surface subjected to said force-pressure is small, said root applies to the bone a larger force thereby improving the forming of said hyalinization zone.

Thus, it should be apparent that, as the screw of the expander according to the present invention is actuated or operated, the generated force will be not applied through the root surface of four dental elements, as in a prior expander, but it will be concentrated on only two dental elements, thereby providing a force value which is twice than the prior force value.

This force, moreover, in the inventive expander is further enhanced, since it is not applied to four palatine half-arms, but is only to two palatine half-arms.

Thus, said force is fully applied to the two root portions of the dental elements and consequently to the bone, thereby positively affecting the paradontal assembly, to properly form said hyalinization zone.

It has been found that the invention fully achieves the intended aim and objects.

In practicing the invention, the used materials, as well as the contingent size and shapes, can be any, according to requirements.

## Claims

1. An improved construction for quickly expanding a patient palate, **characterized in that** said construction comprises a central body therefrom a single right palatine half-bar and a single left palatine half-bar extend which, in turn, are housed, through orthodontic bands, or are directly glued, in/to a single right dental element and a single left dental element.

2. An improved quick expander construction, according to claim 1, **characterized in that** said central body comprises a pair of supporting blocks, respectively adapted to support said right half-bar and said left half-bar, said supporting blocks being coupled by a guide bar rigid with one of said supporting blocks and slidable in a sliding side formed in the other supporting block.

3. An improved quick expander construction, according to claim 1 or 2, **characterized in that** said two supporting blocks are coupled to one another by a coupling central screw having opposite threads, thereby to each revolution of said central screw will correspond a displacement either toward one another or away from one another of said supporting blocks.

4. An improved quick expander construction, according to one or more of the preceding claims, **characterized in that** said orthodontic bands are welded to a single-bar joining element.

5. An improved quick expander construction, according to one or more of the preceding claims, **characterized in that** said central screw has a variable length, for example of 8, 11 or 13 mm, depending on an expanding degree to be achieved.

6. An improved quick expander construction, according to one or more of the preceding claims, **characterized in that** said quick expander is so designed and arranged as not to hinder a wedge opening of an inter-maxillary suture, said opening depending exclusively by a mechanical actuation of said expander central screw.

7. An improved quick expander construction, according to one or more of the preceding claims, **characterized in that** said quick expander is so designed and arranged as to provide an actual increase of an inter-canine diameter and an efficient transforming from a high and ogival palate to a structurally physiologic palate.

8. An improved quick expander construction, according to one or more of the preceding claims, **characterized in that** each actuation of said expander central screw provides on an involved dental elements a pressure of about 8/9 Kg, all the generated force being applied only on two dental elements.

9. An improved -quick expander construction, according to one or more of the preceding claims, **characterized in that,** as said central screw is actuated, the force generated thereby is concentrated only on two dental elements, thereby providing a double force strength; said orthopedic force being concentrated only on two palatine half-arms, thereby further enhancing the force generated by said screw, said force being applied to the two root portions of said dental elements, thereby further applying said force to the dental bone, and improving the forming of a hyalinization zone.

10. An improved quick expander construction, according to one or more of the preceding claims, **characterized in that** it comprises one or more of the disclosed and/or illustrated characteristics.
